# EUROPÄISCHE PATENTSCHRIFT

(11) **EP 4 157 576 B1**
(45) Veröffentlichungstag und Bekanntmachung des Hinweises auf die Patenterteilung: **30.10.2024**
(21) Anmeldenummer: 21729547.6
(22) Anmeldetag: 01.06.2021
(51) Int. Cl.: H04W 84/12, H04W 12/50

(54) **VORRICHTUNG ZUR ERFASSUNG VON SCHWEISSPARAMETERN**
DEVICE FOR DETECTING WELDING PARAMETERS
DISPOSITIF DE DÉTECTION DES PARAMÈTRES DE SOUDURE

(30) Priorität: 02.06.2020 EP 20177878
(43) Veröffentlichungstag der Anmeldung: 05.04.2023
(73) Patentinhaber: FRONIUS INTERNATIONAL GmbH, 4643 Pettenbach (AT)
(72) Erfinder: EISENKOLB, Thomas, 4600 Wels-Thalheim (AT); WITTMANN, Manfred, 4600 Wels-Thalheim (AT)
(74) Vertreter: Patentanwälte Pinter & Weiss OG
(86) Internationale Anmeldenummer: PCT/EP2021/064610
(87) Internationale Veröffentlichungsnummer: WO 2021/245050

(56) Entgegenhaltungen:
- EP-A1- 3 062 951
- EP-B1- 3 062 951
- WO-A1-2016/118998
- US-A1- 2015 273 610
- US-A1- 2016 318 114

## Beschreibung

Die Erfindung betrifft eine Erfassungsvorrichtung für ein Schweißgerät, zur Erfassung zumindest eines Schweißparameters eines mit dem Schweißgerät durchführbaren Schweißprozesses, ein Schweißgerät zur Durchführung eines Schweißprozesses sowie ein Verfahren zum Betreiben einer, an einem Schweißgerät angeordneten Erfassungsvorrichtung.

Bei Schweißverfahren ist es zunehmend wichtig, Informationen über die mit einem Schweißgerät durchgeführten Schweißprozess zu erhalten, insbesondere über die verwendeten Schweißparameter. Zu den Schweißparametern zählen beispielsweise die elektrische Schweißspannung, der elektrische Schweißstrom, die Drahtvorschubgeschwindigkeit des verwendeten Schweißdrahts sowie die Menge und Durchflussgeschwindigkeit eines allfällig verwendeten Schutzgases oder Arbeitsgases, etc., wobei insbesondere auch zeitliche Verläufe von Schweißparameter von Bedeutung sind. Oftmals ist es gewünscht, diese Informationen in einem zentralen Datenmanagementsystem zu speichern und zu verwalten, wodurch z.B. die erfassten Daten von mehreren, auch verschiedenen Schweißgeräten zentral gespeichert und verwaltet werden können. Dadurch ist es beispielsweise möglich, bestimmte Informationen hinsichtlich bestimmter Qualitätskriterien der durchgeführten Schweißprozesse zu generieren. Beispielsweise könnten Schweißparameter eines Schweißgeräts über der Zeit ausgewertet werden, um daraus z.B. Rückschlüsse auf ggf. altersbedingte Abweichungen oder Schwankungen bestimmter Schweißparameter ziehen zu können. Es könnten z.B. auch die Daten mehrerer gleichartiger Schweißgeräte verglichen werden, um daraus z.B. Schwankungen der Schweißparameter gleichartiger Schweißprozesse zu ermitteln, um daraus ggf. Rückschlüsse auf fertigungsbedingte Abweichungen ziehen zu können. Solche Daten können auch zur Qualitätssicherung und zur nachträglichen Fehlersuche verwendet werden.

In modernen Schweißgeräten werden in der Regel ein oder mehrere Schweißparameter geregelt, um einen bestimmten Schweißprozesses durchzuführen, wie z.B. einen Kurzlichtbogenschweißprozess, Impulsschweißprozess, CMT-Schweißprozess, etc. In den Schweißgeräten ist dazu meist eine Steuerungseinheit vorgesehen, in der ein oder mehrere Regler implementiert sind. Die Schweißgeräte haben daher meist Kenntnis über die zur Regelung benötigten Istwerte des oder der einzuregelnden Schweißparameter. Über geeignete Erfassungseinrichtungen des Schweißgeräts können beispielsweise der Schweißstrom, die Schweißspannung, die Impulsfrequenz des Schweißstroms, die Vorschubgeschwindigkeit des Schweißdrahts, etc. erfasst werden. Moderne Schweißgeräte verfügen oftmals auch über eine Datenkommunikationsschnittstelle, über welche interessierende Daten, wie z.B. die während eines mit dem Schweißgerät durchgeführten Schweißprozesses verwendeten Schweißparameter, ausgelesen werden können. Das Schweißgerät kann über die Datenkommunikationsschnittstelle beispielsweise an ein zentrales Datenmanagementsystem angebunden sein, das z.B. auf einem Server-Computer implementiert ist. Benutzer, die Zugriff auf das zentrale Datenmanagementsystem haben, können dann die Daten von den an das Datenmanagementsystem angeschlossenen Schweißgeräten verwalten und auswerten.

Oftmals werden jedoch auch ältere Schweißgeräte eingesetzt, die noch nicht über eine solche Datenerfassung und/oder Datenkommunikationsschnittstelle verfügen. Solche Schweißgeräte können daher nicht in ein zentrales Datenmanagementsystem eingebunden werden. Oftmals werden auch Schweißgeräte verschiedener Hersteller eingesetzt, die unter Umständen nicht mit dem verwendeten zentralen Datenmanagementsystem kompatibel sind. Um aber trotzdem Kenntnis über die Daten der genannten Schweißgeräte zu erhalten und die Daten in einem gemeinsamen zentralen Datenmanagementsystem verwalten zu können, sind Erfassungsvorrichtungen in Form von eigenständigen Geräten bekannt, die herstellerunabhängig mit unterschiedlichsten Arten von Schweißgeräten verwendet werden können. Die Erfassungsvorrichtung kann mit dem jeweiligen Schweißgerät verbunden werden, um die Daten des Schweißgeräts und/oder Schweißparameter des Schweißprozesses zu erfassen. Eine derartige Erfassungsvorrichtung kann beispielsweise in geeigneter Weise mit einem Schweißgerät verbunden werden, um den Schweißstrom und die Schweißspannung zu messen.

An der Erfassungsvorrichtung kann eine geeignete Datenkommunikationsschnittstelle vorgesehen sein, über welche die Erfassungsvorrichtung in das zentrale Datenmanagementsystem eingebunden werden kann. Solche Erfassungsvorrichtungen sind eigenständige Geräte, die vom jeweiligen Schweißgerät, an dem sie angeordnet werden, unabhängig sind. Für die Inbetriebnahme ist daher eine Initialisierung der Erfassungsvorrichtung erforderlich. Dazu kann es notwendig sein, gewisse Initialisierungsparameter festzulegen, wie z.B. Datum, Uhrzeit, Geräteidentifikation des Schweißgeräts und/oder der Erfassungsvorrichtung, Netzwerkkonfigurationsdaten des zentralen Datenmanagementsystems, etc. Durch die Initialisierung ist die Erfassungsvorrichtung für den weiteren Betrieb konfiguriert und die erfassten Daten können eindeutig dem jeweiligen Schweißgerät zugeordnet werden. Bekannte Erfassungsvorrichtungen weisen meist eine Art Benutzerschnittstelle auf, beispielsweise einen Touchscreen oder Druckknöpfe, über welche die Initialisierung durchgeführt werden kann.

US 2015/273610 A1 (Basis für den Oberbegriff der Ansprüche 1 und 9) offenbart ein Schweißgerät, welches eine integrierte Schweißspannungsversorgung hat. Das Schweißsystem ist geeignet, alle gängigen Schweißverfahren autonom auszuführen. Schweißgeräte werden oftmals in Produktionsstätten verwendet, in denen aufgrund der mit den Schweißgeräten durchgeführten Schweißprozesse selbst, aber insbesondere auch aufgrund anderer Fertigungsprozesse in der Umgebung des jeweiligen Schweißgeräts, oftmals eine relativ hohe Schmutz- und Staubbelastung vorliegt. Beispielsweise können metallische Schweißspritzer, Späne oder Kühl- und Schmiermittel von spanenden Fertigungsprozessen, etc. dazu führen, dass die Erfassungsvorrichtung und insbesondere die Benutzerschnittstelle verunreinigt oder sogar beschädigt wird. Zudem sind Schweißgeräte während eines Schweißvorgangs oftmals am Boden angeordnet, sodass die Schweißleitungen ebenfalls zumindest teilweise am Boden liegen. Wenn die Erfassungsvorrichtung beispielsweise an die Schweißleitung angebunden ist, kann es daher vorkommen, dass die Erfassungsvorrichtung schlecht zugänglich ist. Auch besteht dabei die Gefahr, dass die Erfassungsvorrichtung durch herabfallende Teile oder Werkzeuge beschädigt wird.

Es ist daher eine Aufgabe der Erfindung, eine Erfassungsvorrichtung für ein Schweißgerät sowie ein Verfahren zum Betreiben einer solchen Erfassungsvorrichtung anzugeben, die eine einfachere Inbetriebnahme der Erfassungsvorrichtung ermöglichen.

Erfindungsgemäß wird die Aufgabe mit einer Erfassungsvorrichtung dadurch gelöst, dass die Erfassungsvorrichtung eine Drahtloskommunikationseinheit zur drahtlosen Kommunikation mit einem mobilen Endgerät aufweist, wobei die Drahtloskommunikationseinheit dazu ausgebildet ist, bei Erreichen oder Unterschreiten eines bestimmten Initialisierungsabstands zwischen dem mobilen Endgerät und der Erfassungsvorrichtung und bei gleichzeitiger Ausführung eines vorgegebenen Initialisierungsprogramms am mobilen Endgerät automatisch eine drahtlose Verbindung mit dem mobilen Endgerät herzustellen und einen Initialisierungsvorgang zur Inbetriebnahme der Erfassungsvorrichtung durchzuführen.

Vorzugsweise ist die Drahtloskommunikationseinheit als Nahfeldkommunikationseinheit oder als Bluetooth-Kommunikationseinheit ausgebildet. Dadurch können bewährte, zuverlässige Technologien für die Drahtloskommunikationseinheit verwendet werden.

Die Erfassungsvorrichtung ist vorzugsweise dazu ausgebildet, während eines mit dem Schweißgerät durchgeführten Schweißprozesses einen Schweißstrom und eine Schweißspannung im Schweißstromkreis des Schweißgeräts zu erfassen, wobei an der Erfassungsvorrichtung zwei Stromanschlüsse zur seriellen Einbindung der Erfassungsvorrichtung in den Schweißstromkreis und ein Spannungsmessanschluss zur parallelen Einbindung der Erfassungsvorrichtung in den Schweißstromkreis vorgesehen sind. Dadurch ist es möglich, die wesentlichen Schweißparameter Schweißstrom und Schweißspannung zu erfassen.

An der Erfassungsvorrichtung ist in vorteilhafter Weise auch eine Datenkommunikationsschnittstelle zur Verbindung der Erfassungsvorrichtung mit einer Auswerteeinheit vorgesehen, vorzugsweise in Form einer Ethernet-Schnittstelle oder WLAN-Schnittstelle. Dadurch können die erfassten Daten z.B. in einfacher Weise in ein Datenmanagement-System integriert werden.

Es ist weiters vorteilhaft, wenn an der Erfassungsvorrichtung einen Gas-Messanschluss zum Anschluss eines Gas-Sensors vorgesehen ist und/oder dass an der Erfassungsvorrichtung ein Drahtvorschub-Messanschluss zum Anschluss eines Drahtvorschub-Sensors vorgesehen ist. Dadurch können weitere wichtige Schweißparameter erfasst werden.

Besonders bevorzugt ist die die Erfassungsvorrichtung dazu ausgebildet, den Initialisierungsabstand in Abhängigkeit einer Signalstärke eines vom mobilen Endgerät ausgesandten Verbindungssignals festzulegen. Dadurch kann die Leistungsfähigkeit verschiedener Endgeräte berücksichtigt werden, wodurch beispielsweise ein möglichst konstanter Initialisierungsabstand erreicht werden kann.

Weiters kann es vorteilhaft sein, wenn die Erfassungsvorrichtung dazu ausgebildet ist, nach dem erstmaligen Verbinden mit einem mobilen Endgerät, eine wiederholte drahtlose Verbindung mit dem selben mobilen Endgerät bei einem relativ zum Initialisierungsabstand größeren Verbindungsabstand herzustellen. Dadurch ist es bei der wiederholten Verbindung nicht mehr nötig, das Endgerät auf den relativ geringen Initialisierungsabstand an die Erfassungsvorrichtung heranzubewegen, sondern die Verbindung zum bereits bekannten Endgerät kann bereits bei einem größeren Abstand hergestellt werden.

Die Aufgabe wird zudem mit einem Verfahren dadurch gelöst, dass zur Durchführung einer für eine Inbetriebnahme der Erfassungsvorrichtung erforderlichen Initialisierung ein vorgegebenes Initialisierungsprogramm auf einem mobilen Endgerät ausgeführt wird und das mobile Endgerät gleichzeitig der Erfassungsvorrichtung angenähert wird, wobei eine Drahtloskommunikationseinheit der Erfassungsvorrichtung automatisch eine drahtlose Verbindung zum mobilen Endgerät herstellt wird und ein Initialisierungsvorgang zur Inbetriebnahme der Erfassungsvorrichtung durchgeführt wird, wenn ein bestimmter Initialisierungsabstand zwischen dem mobilen Endgerät und der Erfassungsvorrichtung erreicht oder unterschritten wird.

Die gegenständliche Erfindung wird nachfolgend unter Bezugnahme auf die Figuren 1 bis 2 näher erläutert, die beispielhaft, schematisch und nicht einschränkend vorteilhafte Ausgestaltungen der Erfindung zeigen. Dabei zeigt
Fig.1 eine Erfassungsvorrichtung in einer vorteilhaften Ausgestaltung und
Fig.2 ein Schweißgerät mit einer daran angeordneten Erfassungsvorrichtung.

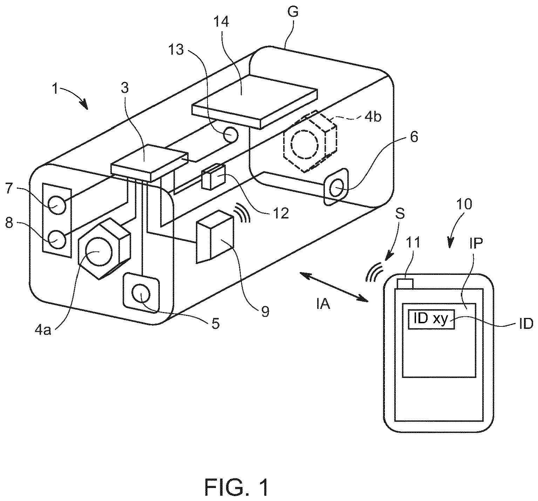

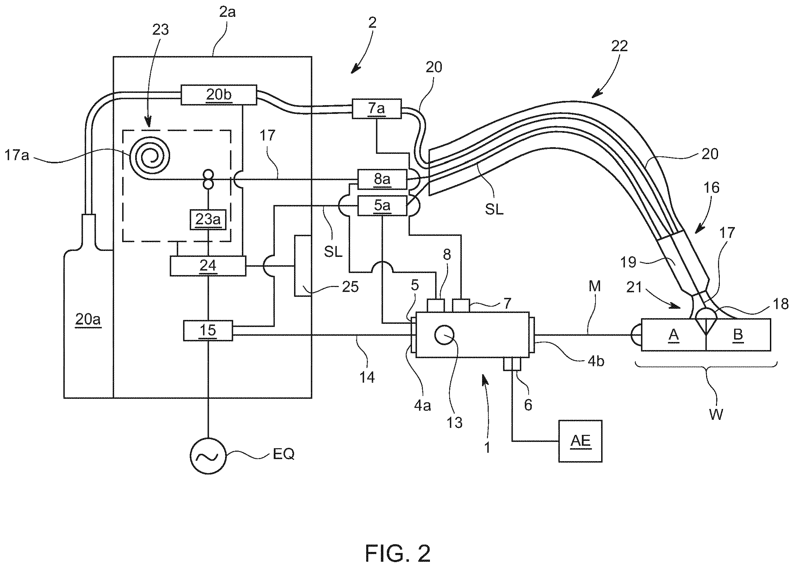

In Fig.1 ist eine erfindungsgemäße Erfassungsvorrichtung 1 in einer vorteilhaften Ausgestaltung dargestellt. Die Erfassungsvorrichtung 1 weist ein Gehäuse G auf, das beispielsweise aus einem geeigneten Kunststoff hergestellt sein kann. Im Gehäuse G ist eine Steuerungseinheit 3 zur Steuerung der Funktionen der Erfassungsvorrichtung 1 vorgesehen. An der Erfassungsvorrichtung 1 sind ein erster Stromanschluss 4a (z.B. Pluspol) und ein zweiter Stromanschluss 4b (z.B. Minuspol bzw. Masse) vorgesehen, die mit der Steuerungseinheit 3 verbunden sind. Über die Stromanschlüsse 4a, 4b kann die Erfassungsvorrichtung 1 seriell in einen Schweißstromkreis eines Schweißgeräts 2 eingebunden werden. Die Stromanschlüsse 4a, 4b sind vorzugsweise in Form von im Schweißbereich gängigen Kabelbuchsen ausgebildet. Dadurch ist die Erfassungsvorrichtung 1 mit den meisten Schweißgeräten 2 bekannter Hersteller kompatibel und kann seriell in eine Schweißleitung, z.B. eine Masseleitung M integriert werden, wie in Fig.2 dargestellt ist.

Die Steuerungseinheit 3 ist dazu ausgebildet, einen im Schweißstromkreis fließenden Schweißstrom als Beispiel eines Schweißparameters zu erfassen und kann z.B. als geeignete Hardware und/oder Software ausgeführt sein. Dazu kann in der Steuerungseinheit 3 eine geeignete Strom-Messeinheit integriert sein oder die Steuerungseinheit 3 kann mit einer geeignete Strom-Messeinheit verbunden sein, die ebenfalls im Gehäuse G angeordnet ist und die mit den Stromanschlüssen 4a, 4b elektrisch verbunden ist. Vorzugsweise ist die Erfassungsvorrichtung 1 dazu geeignet, den Schweißstrom mit einer für gängige Schweißprozesse ausreichend hohen Abtastrate zu erfassen. Dadurch kann beispielsweise ein pulsierender Schweißstrom mit einer bestimmten Impulsfrequenz erfasst werden. Vorzugsweise entspricht die Abtastrate daher zumindest der größten erwarteten Impulsfrequenz des Schweißstroms.

An der dargestellten Erfassungsvorrichtung 1 ist weiters ein Spannungsmessanschluss 5 vorgesehen, über den die Erfassungsvorrichtung 1 parallel in den Schweißstromkreis eingebunden werden kann, um die Schweißspannung im Schweißstromkreis als weiteres Beispiel eines Schweißparameters zu erfassen. Der Spannungsmessanschluss 5 ist wiederum mit der Steuerungseinheit 3 oder mit einer geeigneten Spannungs-Messeinheit verbunden.

Da die Schweißspannung und der Schweißstrom die wichtigsten Schweißparameter eines Schweißprozesses sind, ist die Erfassungsvorrichtung 1 in einer einfachen Ausführung zumindest dazu ausgebildet, den Schweißstrom und die Schweißspannung zu erfassen. Um die Schweißspannung zu erfassen, kann der Spannungsmessanschluss 5 z.B. mittels eines geeigneten Kabels mit einem Spannungs-Messpunkt 5a (Fig.2) verbunden sein, der in geeigneter Weise in eine Schweißleitung SL integriert werden kann, beispielsweise an einer Anschlussbuche der Schweißleitung SL am Schweißgerät 2. Die erfassten Schweißparameter werden vorzugsweise in der Erfassungsvorrichtung 1 digitalisiert, in der Regel mit einem hinlänglich bekannten A/D-Wandler (Analog zu Digital Wandler).

Vorzugsweise ist an der Erfassungsvorrichtung 1 auch eine Datenkommunikationsschnittstelle 6 zur Verbindung der Erfassungsvorrichtung 1 mit einer Auswerteeinheit AE (Fig.2) vorgesehen. Die Datenkommunikationsschnittstelle 6 ist mit der Steuerungseinheit 3 verbunden und kann beispielsweise drahtgebunden, z.B. als Ethernet-Schnittstelle ausgeführt sein. Die Datenkommunikationsschnittstelle 6 könnte aber beispielsweise auch drahtlos ausgebildet sein, z.B. als WLAN-Schnittstelle. Es kann auch vorgesehen sein, die Datenkommunikationsschnittstelle 6 mit verschiedenen Kommunikationsprotokollen, z.B. Ethernet, CAN, Profibus, MQTT, OPCUA, usw., konfigurierbar zu machen oder verschiedene Datenkommunikationsschnittstellen 6 vorzusehen.

Die Auswerteeinheit AE kann z.B. ein geeigneter Computer sein, auf dem die von der Erfassungsvorrichtung 1 erfassten Daten ausgewertet werden können. Die Auswerteeinheit AE kann aber beispielswiese auch als ein Datenmanagement-System ausgeführt sein, z.B. in Form eines geeigneten Server-Computers, auf dem ein geeignete Datenmanagement-Software implementiert ist. Über ein geeignetes Computernetzwerk, z.B. LAN oder WLAN kann z.B. mittels eines Endgeräts auf die Datenmanagement-Software des Server-Computers zugegriffen werden, um die von der Erfassungsvorrichtung 1 erfassten Daten auszuwerten. Dies ist insbesondere vorteilhaft, weil damit eine Mehrzahl von Erfassungsvorrichtungen 1 und/oder andere Geräte in das Datenmanagement-System integriert werden können.

In vorteilhafter Weise ist an der Erfassungsvorrichtung 1 auch einen Gas-Messanschluss 7 zum Anschluss eines geeigneten Gas-Sensors 7a (Fig.2) vorgesehen. Alternativ oder zusätzlich kann auch einen Drahtvorschub-Messanschluss 8 zum Anschluss eines geeigneten Drahtvorschub-Sensors 8a (Fig.2) vorgesehen sein. Der Gas-Messanschluss 7 und/oder der Drahtvorschub-Messanschluss 8 sind mit der Steuerungseinheit 3 verbunden, welche die vom jeweiligen Sensor erzeugten Sensorwerte erfasst. Mit dem Gas-Sensor kann z.B. die Durchflussmenge eines Schutzgases oder Arbeitsgases, als weiterer Schweißparameter, gemessen werden, das für einen Schweißprozess verwendet wird. Mit dem Drahtvorschub-Sensors 8a kann z.B. eine Schweißdrahtvorschub-Geschwindigkeit eines Schweißdrahts, als weiterer Schweißparameter, gemessen werden, der für einen Schweißprozess verwendet wird. Wenn ein Drahtvorschub-Messanschluss 8 vorgesehen ist, kann der Spannungsmessanschluss 5 ggf. auch entfallen und die Schweißspannung kann über einen elektrischen Kontakt des Drahtvorschub-Sensors 8a mit dem Schweißdraht gemessen werden.

Gemäß der Erfindung ist in der Erfassungsvorrichtung 1 eine Drahtloskommunikationseinheit 9 zur drahtlosen Kommunikation mit einem mobilen Endgerät 10 vorgesehen. Die Steuerungseinheit 3 ist mit der Drahtloskommunikationseinheit 9 verbunden, um die Funktion der Drahtloskommunikationseinheit 9 zu steuern. Natürlich könnte die Drahtloskommunikationseinheit 9 aber auch in die Steuerungseinheit 3 integriert sein. Als Drahtloskommunikationseinheit 9 kann beispielsweise eine bekannte Nahfeldkommunikationseinheit (NFC) oder eine Bluetooth-Kommunikationseinheit verwendet werden. Besonders bevorzugt wird eine Bluetooth-Kommunikationseinheit mit dem Funkstandard "Bluetooth Low Energy" (BLE) bzw. "Bluetooth-Smart" verwendet, der sich durch einen geringeren Energieverbrauch und geringere Kosten gegenüber dem herkömmlichen Bluetooth-Standard auszeichnet.

Die Drahtloskommunikationseinheit 9 ist dazu vorgesehen, eine drahtlose Verbindung mit einem mobilen Endgerät 10 herzustellen und einen Initialisierungsvorgang zur Inbetriebnahme der Erfassungsvorrichtung 1 durchzuführen. Wie eingangs erwähnt, ist eine Initialisierung erforderlich, um die Erfassungsvorrichtung eindeutig dem Schweißgerät zuordnen zu können, an dem es zur Erfassung der Schweißparameter verwendet wird. Beispielsweise können im Zuge der Initialisierung der Erfassungsvorrichtung 1 das Datum, die Uhrzeit sowie eine Kennung des Schweißgeräts und/oder der Erfassungsvorrichtung 1 (z.B. eine Seriennummer) festgesetzt werden. Dadurch können die erfassten Daten eindeutig einem bestimmten Zeitpunkt (Datum + Uhrzeit) und einem bestimmten Schweißgerät zugeordnet werden und sind damit von anderen Daten unterscheidbar. Beispielsweise kann in der Erfassungsvorrichtung 1 eine Speichereinheit 12 vorgesehen sein, in der zumindest ein festlegbarer Initialisierungsparameter hinterlegt ist (beispielsweise Datum, Uhrzeit, Schweißgerätetyp, etc.), der bei der Durchführung des Initialisierungsvorgangs auf einen bestimmten Initialisierungswert festgelegt wird. Die Speichereinheit 12 kann z.B. als separate Einheit vorliegen oder auch in der Steuerungseinheit 3 implementiert sein. Bisher wurde der Initialisierungsvorgang meist über eine Benutzerschnittstelle, wie z.B. einen Touchscreen durchgeführt, was zu den eingangs genannten Problemen führte.

Um diese Probleme zu vermeiden ist es mit der erfindungsgemäßen Erfassungsvorrichtung 1 nunmehr möglich, den Initialisierungsvorgang mittels eines mobilen Endgeräts 10 über eine drahtlose Kommunikationsverbindung durchzuführen. Dazu wird durch einen Benutzer am mobilen Endgerät 10, z.B. auf einem geeigneten Smartphone oder Tablet-Computer, ein Initialisierungsprogramm IP ausgeführt, beispielsweise in Form einer geeigneten "App". Wenn das Initialisierungsprogramm IP gestartet wurde wird das mobile Endgerät 10 vom Benutzer in Richtung der Erfassungsvorrichtung 1 bewegt, beispielsweise indem der Benutzer auf das Schweißgerät, an dem die Erfassungsvorrichtung 1 angeordnet ist, zu geht. Sobald ein bestimmter Initialisierungsabstand IA zwischen dem mobilen Endgerät 10 und der Erfassungsvorrichtung 1 erreicht oder unterschritten wird, wird automatisch eine drahtlose Verbindung zwischen der Drahtloskommunikationseinheit 9 der Erfassungsvorrichtung 1 und dem mobilen Endgerät 10 hergestellt.

Es wird also gleichzeitig von der Erfassungsvorrichtung 1 der Initialisierungsabstand IA überwacht und vom Endgerät 10 das Initialisierungsprogramm IP ausgeführt, sodass eine Verbindung bzw. Kopplung zwischen der Erfassungsvorrichtung 1 und dem Endgerät 10 hergestellt wird.

Am mobilen Endgerät 10 ist natürlich ebenfalls eine geeignete Drahtloskommunikationseinheit 11 vorgesehen, beispielsweise eine Bluetooth-Kommunikationseinheit, die in einem Smartphone der Regel standardmäßig verbaut ist. Zur Durchführung des Initialisierungsvorgangs sind sowohl die Drahtloskommunikationseinheit 9 der Erfassungsvorrichtung 1, als auch die Drahtloskommunikationseinheit 11 des mobilen Endgeräts 10 aktiviert.

Dadurch ist es nicht mehr wie bisher notwendig, eine unter Umständen schlecht zugängliche und/oder verschmutze Erfassungsvorrichtung direkt per Hand beispielsweise über einen Touchscreen o.ä. bedienen zu müssen. Vielmehr kann der Initialisierungsvorgang für die Inbetriebnahme der Erfassungsvorrichtung einfach und bequem über die drahtlose Verbindung durchgeführt werden, ohne dass die Erfassungsvorrichtung berührt werden muss. Auf eine Benutzerschnittstelle 14 kann daher grundsätzlich verzichtet werden, sodass die Erfassungsvorrichtung 1 im Wesentlichen gänzlich gekapselt ausgebildet sein kann (bis auf die Anschlüsse und Schnittstellen). Dadurch kann die Erfassungsvorrichtung 1 sehr robust und schmutzunempfindlich ausgeführt werden. Natürlich könnte aber trotzdem eine Benutzerschnittstelle 14 vorgesehen sein, z.B. um eine redundante Bedienung (drahtlos + manuell) zu ermöglichen.

Vorzugsweise wird der Initialisierungsabstand IA von der Erfassungsvorrichtung 1 in Abhängigkeit einer Signalstärke eines vom mobilen Endgerät 10 ausgesandten Verbindungssignals S festgelegt. Als Indikator der Signalstärke des Verbindungssignals S kann beispielsweise der bekannte RSSI-Wert (RSSI = Received Signal Strength Indication) herangezogen werden. Allgemein gilt, je höher der RSSI-Wert, desto stärker ist das Verbindungssignal S. Je näher sich das mobile Gerät 10 an der Erfassungsvorrichtung 1 befindet, desto höher ist folglich die Signalstärke des Verbindungssignals S, was von der Steuerungseinheit 3 über die Höhe des RSSI-Werts festgestellt werden kann. Die Signalstärke des Verbindungssignals S des mobilen Endgeräts 10 kann damit als äquivalent zum Abstand zwischen der Erfassungsvorrichtung 1 und dem mobilen Endgerät 10 betrachtet werden. Folglich kann über die Signalstärke festgestellt werden, ob sich das mobile Endgerät 10 innerhalb des (vorgegebenen oder einstellbaren) Initialisierungsabstands IA befindet. Ist diese Bedingung erfüllt, stellt die Erfassungsvorrichtung 1 automatisch eine drahtlose Verbindung zum mobilen Endgerät 10 her. Dies kann dem Benutzer z.B. dadurch signalisiert werden, dass eine entsprechende Geräte-Kennung ID (z.B. Seriennummer, etc.) der Erfassungsvorrichtung 1 im Initialisierungsprogramm IP am mobilen Endgerät aufscheint. Der Benutzer kann die Erfassungsvorrichtung 1 beispielsweise über eine Auswahl der Geräte-Kennung auswählen und die erforderlichen Initialisierungseinstellungen vornehmen. Beispielsweise könnten auch im Initialisierungsprogramm IP bereits bestimmte Voreinstellungen gespeichert sein, die vom Benutzer für den Initialisierungsvorgang ausgewählt werden können, wie z.B. bekannte Typen von Schweißgeräten, bekannte Netzwerkkonfigurationen, bekannte Typen von Erfassungsvorrichtungen, etc. Die Daten brauchen dadurch lediglich ausgewählt werden und müssen nicht manuell eingegeben werden, was die Inbetriebnahme weiter vereinfacht. Der Initialisierungsabstand IA kann beispielsweise im Bereich von 0,5m bis 1m betragen.

Um die Sicherheit zu erhöhen, kann der Zugriff z.B. durch ein Passwort geschützt sein, sodass nur berechtigte Benutzer Zugriff auf die Erfassungsvorrichtung 1 haben. Beispielsweise kann ähnlich wie bei einem WLAN-Router eine Art Default-Zugang eingerichtet sein, sodass ein Benutzer mittels eines z.B. vom Hersteller vorgegebenen Default-Passworts erstmaligen Zugriff auf die Erfassungsvorrichtung 1 erhält. Im Rahmen der Initialisierung kann beispielsweise ein eigenes Passwort als Ersatz für das Default-Passwort vergeben werden. Dadurch kann das Herstellen einer wiederholten drahtlosen Verbindung mit der Erfassungsvorrichtung 1 (nach der erstmaligen Verbindung) geschützt werden, sodass Einstellungen nur durch berechtigte Benutzer geändert werden können.

Die Signalstärke des drahtlosen Verbindungssignals S eines mobilen Endgeräts 10 hängt unter anderem von den verbauten Komponenten ab, wie z.B. von der Leistungsfähigkeit der verwendeten Antenne oder des verwendeten Prozessors. Das kann bedeuten, dass sich der Initialisierungsabstand IA, bei dem die drahtlose Verbindung automatisch hergestellt wird, bei verschiedenen mobilen Endgeräten 10 unterscheidet. Die Bandbreite an Komponenten, die die Signalstärke beeinflussen (z.B. die Zahl verschiedener Hersteller und verschiedener Typen von Antennen und Prozessoren) ist aber bei bekannten mobilen Geräten 10 begrenzt. Beispielsweise sind die Zahl der Hersteller von Smartphones und auch die Zahl der je Hersteller verfügbaren Geräte überschaubar. Oftmals verwenden bekannte Hersteller auch identische Komponenten.

Um zu erreichen, dass der Initialisierungsabstand IA unabhängig vom verwendeten mobilen Endgerät 10 möglichst konstant ist, kann es daher vorteilhaft sein, wenn Informationen über bekannte Hersteller und/oder Modelle und/oder Komponenten, etc. in der Erfassungsvorrichtung 1 hinterlegt sind. Die Information kann z.B. in Form einer Geräte-Kennung oder einer Seriennummer des Modells und/oder der Komponenten in der Speichereinheit 12 der Erfassungsvorrichtung 1 gespeichert sein. Dadurch kann z.B. einem bestimmten Modell und/oder einer bestimmten Komponente ein bestimmter Initialisierungsabstand IA in Abhängigkeit der Leistungsfähigkeit zugeordnet werden. Das Initialisierungsprogramm IP kann dann in vorteilhafterweise während des Verbindungsaufbaus die entsprechende Information (z.B. Seriennummer des Geräts und/oder der Antenne) aus dem mobilen Endgerät 10 auslesen und an die Erfassungsvorrichtung 1 senden.

Die Erfassungsvorrichtung 1 kann die erhaltene Information mit den gespeicherten Informationen vergleichen und folglich dafür sorgen, dass die drahtlose Verbindung zur Initialisierung unabhängig vom verwendeten mobilen Gerät 10 möglichst beim gleichen Initialisierungsabstand IA hergestellt wird. Dadurch kann die drahtlose Verbindung zu einem mobilen Endgerät 10 mit einer leistungsfähigeren Drahtloskommunikationseinheit 11 beispielsweise erst bei einer höheren Signalstärke (z.B. einem größeren RSSI-Wert) des Verbindungssignals S hergestellt werden, als die drahtlose Verbindung zu einem mobilen Endgerät 10 mit einer relativ dazu leistungsschwächeren Drahtloskommunikationseinheit 11. Wird ein unbekanntes mobiles Endgerät 10 verwendet, kann z.B. die jeweils schwächste Leistung angenommen werden. Dadurch kann es aber natürlich vorkommen, dass die drahtlose Verbindung ggf. schon bei einem größeren Initialisierungsabstand IA hergestellt wird, falls das unbekannte mobile Endgerät 10 ggf. eine leistungsstarke Drahtloskommunikationseinheit 11 aufweist.

Es kann auch vorteilhaft sein, wenn nach dem erstmaligen Herstellen einer Verbinden zwischen der Erfassungsvorrichtung 1 und dem mobilen Endgerät 10 eine wiederholte drahtlose Verbindung mit demselben mobilen Endgerät 10 bereits bei einem relativ zum Initialisierungsabstand IA größeren Verbindungsabstand hergestellt wird. Beispielsweise kann die Erfassungsvorrichtung 1 die Geräte-Kennung des mobilen Endgeräts 10 (die vorzugsweise bei der erstmaligen Verbindung vom mobilen Endgerät 10 an die Erfassungsvorrichtung 1 gesendet wurde) dazu verwenden, um festzustellen, dass das mobile Endgerät 10 bereits einmal mit der Erfassungsvorrichtung 1 verbunden war. Die drahtlose Verbindung kann dann beispielsweise bereits erfolgen, wenn eine ausreichend große Signalstärke des Verbindungssignals festgestellt wurde.

Nach der abgeschlossenen Initialisierung können also die Istwerte der Schweißparameter eines laufenden Schweißprozesses von der Erfassungsvorrichtung 1 erfasst werden. Welche Daten - Parameter des Schweißprozesses - hier genau erfasst werden, wurde entsprechend bei der Initialisierung konfiguriert. Über die Datenkommunikationsschnittstelle 6 erfolgt dann der Datenaustausch mit der Auswerteeinheit AE.

Wie erwähnt kann in der Erfassungsvorrichtung 1 auch eine Speichereinheit 12 vorgesehen sein. Die Speichereinheit 12 kann neben der oben genannten Hinterlegung der gerätespezifischen Informationen z.B. auch zur Speicherung der erfassten Schweißparameter verwendet werden. Dadurch wäre beispielsweise auch eine "Offline-Betrieb" der Erfassungsvorrichtung 1 möglich, bei dem die Erfassungsvorrichtung 1 nicht mit einer Auswerteeinheit AE verbunden ist. Die erfassten Daten könnten dadurch zunächst in der Speichereinheit 12 gespeichert werden und erst zu einem späteren Zeitpunkt, beispielswiese unabhängig vom Betrieb des Schweißgeräts an eine Auswerteeinheit AE übertragen werden. Dies kann z.B. bei mobilen Anwendungen vorteilhaft sein, bei welchen z.B. keine Anbindung an das Datenmanagementsystem möglich ist.

Die Energieversorgung der Erfassungsvorrichtung 1 kann beispielsweise über den Schweißstromkreis des Schweißgeräts erfolgen. Die Erfassungsvorrichtung 1 kann dann z.B. automatisch aktiviert werden, sobald das Schweißgerät aktiviert wird. Es könnte aber auch ein Energiespeicher, beispielsweise in Form einer Batterie in der Erfassungsvorrichtung 1 vorgesehen sein. Die Energieversorgung könnte natürlich auch über eine externe Energiequelle erfolgen, an die die Erfassungsvorrichtung 1 in geeigneter Weise angeschlossen werden kann, beispielsweise an eine herkömmliche Steckdose o.ä. Insbesondere, wenn keine Benutzerschnittstelle 14, z.B. in Form eines Touchscreens vorgesehen ist, kann es vorteilhaft sein, wenn eine Signalisierungseinheit 13 an der Erfassungsvorrichtung 1 vorgesehen ist, beispielsweise in Form einer oder mehrerer geeigneter Lampen wie z.B. Leuchtdioden. Über die Signalisierungseinheit 13 könnte dem Benutzer z.B. der aktuelle Betriebszustand der Erfassungsvorrichtung 1 angezeigt werden. Beispielsweise könnten verschiedene Betriebsmodi der Erfassungsvorrichtung 1 angezeigt werden oder der aktuelle Verbindungszustand der drahtlosen Verbindung. Auch allfällige Fehlerzustände könnten z.B. signalisiert werden.

In Fig.2 ist ein Schweißgerät 2 in Form eines bekannten Metall-Schutzgas-Schweißgeräts (MSG) dargestellt, an dem eine Erfassungsvorrichtung 1 gemäß Fig.1 zur Erfassung von mehreren Schweißparametern angeordnet ist. Das Schweißgerät 2 weist in bekannter Weise eine Schweißstromquelle 15 und einen Schweißbrenner 16 mit einem Schweißdraht 17 als abschmelzende Elektrode auf. Die Schweißstromquelle 15 ist in einem Gehäuse 2a des Schweißgeräts 2 angeordnet und kann über einen geeigneten Anschluss mit einer Energiequelle EQ verbunden werden. Der Schweißdraht 17 kann einer Schweißstelle 18 zugeführt werden, um in bekannter Weise eine Schweißnaht an einem Werkstück W zu erzeugen, indem der Schweißbrenner 16 relativ zum Werkstück W bewegt wird. Im dargestellten Beispiel bilden zwei Bauteile A, B das Werkstück aus, wobei die Bauteile A, B durch die Schweißnaht verbunden werden. Man spricht hierbei auch vom Verbindungsschweißen. Natürlich könnte eine Schweißnaht auch nur auf einem einzigen Bauteil erzeugt werden, man spricht dann vom sogenannten Auftragsschweißen.

Das Schweißgerät 2 weist auch eine Schweißgeräte-Steuerungseinheit 24 auf, über die ein mit dem Schweißgerät 2 durchgeführter Schweißprozess gesteuert werden kann. Das Schweißgerät 2 kann auch eine Schweißgeräte-Benutzerschnittstelle 25 aufweisen, über die ein Benutzer des Schweißgeräts 2 bestimmte Einstellungen des Schweißprozesses vornehmen kann. Beispielsweise kann darüber ein bestimmtes vorgegebenes Schweißprogramm ausgewählt werden und/oder gewisse Schweißparameter ausgewählt oder verändert werden, wie z.B. eine Höhe und/oder Impulsfrequenz des Schweißstroms und/oder der Schweißspannung, Schweißdraht-Vorschubgeschwindigkeit, Schutzgasmenge, etc.

Der Schweißbrenner 16 weist eine Kontakthülse 19 auf, die mittels einer elektrischen Schweißleitung SL mit der Schweißstromquelle 15 verbunden ist. Die Kontakthülse 19 kontaktiert den Schweißdraht 17 am Schweißbrenner 16, um einen Teil eines Schweißstromkreises auszubilden. Um den Schweißstromkreis zu schließen, ist das Werkstück W über eine geeignete zweite Schweißleitung, beispielsweise eine Masseleitung M, ebenfalls mit der Schweißstromquelle 15 elektrisch verbunden. Weiters kann dem Schweißbrenner 16 über eine geeignete Schutzgasleitung 20 ein aktives oder inertes Schutzgas SG zugeführt werden, um die Schweißstelle 18 mittels einer Schutzgasglocke 21 in bekannter Weise von der Umgebung abzuschirmen. Der Schweißdraht 17, die Schutzgasleitung 20 und die Schweißleitung SL können beispielsweise in einem gemeinsamen Schlauchpaket 22 geführt sein. Über das Schlauchpaket 22 ist der Schweißbrenner 16 mit dem Gehäuse 2a des Schweißgeräts 2 verbunden. Aus Gründen der besseren Übersicht ist das Schlauchpaket 22 im Bereich des Gehäuses 2a teilweise aufgebrochen dargestellt.

Im Gehäuse 2 (oder außerhalb) kann eine Schweißdrahtvorschubeinheit 23 mit einem lediglich schematisch angedeuteten Schweißdrahtspeicher 17a und einer Antriebseinheit 23a vorgesehen sein. Die Antriebseinheit 23a kann von der Schweißgeräte-Steuerungseinheit 24 angesteuert werden, um z.B. die Schweißdraht-Vorschubgeschwindigkeit zu steuern, mit der der Schweißdraht 17 der Schweißstelle 18 zugeführt wird. Im Gehäuse 2a (oder an einer anderen Stelle) kann auch ein Druckregler 20 vorgesehen sein, der von der Schweißgeräte-Steuerungseinheit 24 angesteuert werden kann, um einen Durchfluss des Schutzgases zu steuern, mit dem das Schutzgas über die Schutzgasleitung 20 der Schweißstelle 18 zugeführt wird. Der Druckregler 20b kann z.B. einerseits mit einem geeigneten Schutzgasspeicher 20a verbunden sein und andererseits mit der Schutzgasleitung 20 des Schlauchpakets 22. Natürlich ist das dargestellte Schweißgerät 2 nur beispielhaft zu verstehen und es könnte auch ein beliebig anders ausgestaltetes MSG-Schweißgerät verwendet werden oder ein geeignetes Schweißgerät für ein anderes Schweißverfahren, z.B. ein WIG-Schweißgerät mit nicht-abschmelzender Elektrode und separater Zuführeinheit für einen Schweißzusatz. Der Aufbau und die Funktionsweise eines Schweißgeräts 2 sind hinlänglich bekannt, weshalb an dieser Stelle nicht mehr näher darauf eingegangen wird.

Am Schweißgerät 2 ist eine erfindungsgemäße Erfassungsvorrichtung 1 angeordnet. Die Erfassungsvorrichtung 1 ist in Fig.2 nur noch schematisch dargestellt und kann beispielsweise in der Ausgestaltung gemäß Fig.1 ausgebildet sein. Die Erfassungsvorrichtung 1 ist in den Schweißstromkreis integriert, indem die Erfassungsvorrichtung 1 über die Stromanschlüsse 4a, 4b elektrisch seriell in die Masseleitung M eingebunden ist. Dadurch kann die Erfassungsvorrichtung 1 den elektrischen Schweißstrom erfassen, der während eines durchgeführten Schweißprozesses im Schweißstromkreis fließt. Weiters ist die Erfassungsvorrichtung 1 elektrisch parallel in den Schweißstromkreis eingebunden, um während eines durchgeführten Schweißprozesses die elektrische Schweißspannung im Schweißstromkreis zu erfassen. Dazu kann der Spannungsmessanschluss 5 über ein geeignetes Kabel mit einem Spannungs-Messpunkt 5a verbunden sein, der z.B. in der Schweißleitung SL integriert sein kann.

Im dargestellten Beispiel ist auch ein Gas-Sensor 7a vorgesehen, der in geeigneter Weise in der Schutzgasleitung 20 integriert ist, um einen, der während eines durchgeführten Schweißprozesses der Schweißstelle 18 zugeführte Schutzgasmenge äquivalenten Sensorwert zu erzeugen. Der Gas-Sensor 7a ist mit einem geeigneten Kabel an den Gas-Messanschluss 7 der Erfassungsvorrichtung 1 angeschlossen, sodass die Erfassungsvorrichtung 1 aus dem erhaltenen Sensorwert die Durchflussmenge des Schutzgases erfassen kann, z.B. in Form eines Volumenstroms. Bei anderen Schweißverfahren, bei denen statt eines Schutzgases ein Arbeitsgas verwendet wird, beispielsweise beim Laserschweißen, könnte mittels eines geeigneten Gas-Sensors 7a natürlich auch ein Durchfluss-Parameter des Arbeitsgases erfasst werden. In analoger Weise ist ein Drahtvorschub-Sensor 8a vorgesehen, der z.B. einen, der Schweißdrahtvorschubgeschwindigkeit äquivalenten Sensorwert erzeugt. Der Drahtvorschub-Sensor 8a ist mit einem geeigneten Kabel an den Drahtvorschub-Messanschluss 8 der Erfassungsvorrichtung 1 angeschlossen, sodass die Erfassungsvorrichtung 1 aus dem erhaltenen Sensorwert die Schweißdrahtvorschubgeschwindigkeit erfassen kann, mit der der Schweißdraht 17 während eines durchgeführten Schweißprozesses der Schweißstelle 18 zugeführt wird.

Wenn ein Drahtvorschub-Sensor 8a verwendet wird und der Drahtvorschub-Sensor 8a in geeigneter Weise ausgebildet ist, um den Schweißdraht 17 elektrisch zu kontaktieren, dann kann grundsätzlich auch auf einen Spannungsmessanschluss 5 an der Erfassungsvorrichtung 1 verzichtet werden. Die elektrische Schweißspannung kann in diesem Fall über den Drahtvorschub-Sensor 8a abgegriffen werden. Die Erfassungsvorrichtung 1 ist vorzugsweise über die Datenkommunikationsschnittstelle 6, wie z.B. einer Ethernet-Schnittstelle, mit einer geeigneten Auswerteeinheit AE verbunden, beispielsweise mit einem geeigneten Server-Computer eines Datenmanagement-Systems. Dadurch können die während eines Schweißprozesses erfassten Daten der Schweißparameter, wie z.B. Schweißstrom, Schweißspannung, Schweißdrahtvorschubgeschwindigkeit, Schutzgasmenge, etc. an die Auswerteeinheit AE übertragen werden und z.B. darüber verwaltet werden, wie bereits beschrieben wurde.

Für die Inbetriebnahme und Initialisierung der (bereits in geeigneter Weise am Schweißgerät 2 angeordneten) Erfassungsvorrichtung 1 kann z.B. zunächst das Schweißgerät 2 aktiviert werden, z.B. über einen Ein/Aus-Schalter oder über die Benutzerschnittstelle 25. Das Schweißgerät 2 befindet sich dadurch in einem Betriebszustand, in dem das Schweißgerät 2 bereit ist, einen Schweißprozess durchzuführen. Die Erfassungsvorrichtung 1 kann beispielsweise durch das Aktivieren des Schweißgeräts 2 automatisch aktiviert werden, es könnte aber auch ein eigener Ein/Aus-Schalter an der Erfassungsvorrichtung 1 vorgesehen sein, z.B. wenn die Erfassungsvorrichtung 1 über einen eigenen Energiespeicher mit Energie versorgt wird. Der aktive Betriebszustand der Erfassungsvorrichtung 1 kann beispielsweise über die Signalisierungseinheit 13 angezeigt werden, z.B. über eine Leuchtdiode ggf. mit einer bestimmten Farbe.

Sobald die Erfassungsvorrichtung 1 aktiviert ist, ist auch die Drahtloskommunikationseinheit 9 aktiv und versucht eine drahtlose Verbindung mit einem mobilen Endgerät 10 (siehe Fig.1) herzustellen, wie bereits ausführlich beschrieben wurde. Wenn ein Benutzer das dafür vorgesehene Initialisierungsprogramm P auf seinem mobilen Endgerät 10 ausführt (beispielsweise eine geeignete "App" auf seinem Smartphone) und sich ausreichend nahe der Erfassungsvorrichtung 1 nähert, sodass der Initialisierungsabstand IA erreicht oder unterschritten ist, wird eine drahtlose Verbindung zwischen der Erfassungsvorrichtung 1 und dem mobilen Endgerät 10 hergestellt und der Initialisierungsvorgang kann durchgeführt werden. Wenn eine drahtlose Verbindung hergestellt ist, kann dies beispielsweise wiederum über die Signalisierungseinheit 13 angezeigt werden, vorzugsweise aber natürlich auch in geeigneter Weise am mobilen Endgerät 10.

## Patentansprüche

1. Erfassungsvorrichtung (1) für ein Schweißgerät, zur Erfassung zumindest eines Schweißparameters eines mit dem Schweißgerät (2) durchführbaren Schweißprozesses, wobei die Erfassungsvorrichtung (1) eine Drahtloskommunikationseinheit (9) zur drahtlosen Kommunikation mit einem mobilen Endgerät (10) aufweist, wobei die Erfassungsvorrichtung (1) ein eigenständiges Gerät mit einem Gehäuse (G) ist, die vom jeweiligen Schweißgerät (2), an dem sie angeordnet wird, unabhängig ist und in der Erfassungsvorrichtung (1) eine Steuerungseinheit (3) vorgesehen ist, **dadurch gekennzeichnet, dass** die Steuerungseinheit (3) zur Steuerung der Funktionen der Erfassungsvorrichtung (1) ausgebildet ist, und dass die Erfassungsvorrichtung (1) dazu ausgebildet ist, während des mit dem Schweißgerät (2) durchgeführten Schweißprozesses einen Schweißstrom und eine Schweißspannung im Schweißstromkreis des Schweißgeräts (2) zu erfassen, wobei an der Erfassungsvorrichtung (1) zwei Stromanschlüsse (4a, 4b) zur seriellen Einbindung der Erfassungsvorrichtung (1) in den Schweißstromkreis und ein Spannungsmessanschluss (5) zur parallelen Einbindung der Erfassungsvorrichtung (1) in den Schweißstromkreis vorgesehen sind, wobei die Stromanschlüsse (4a, 4b) mit der Steuerungseinheit (3) verbunden sind, **und dass** die Drahtloskommunikationseinheit (9) in der Erfassungsvorrichtung (1) dazu ausgebildet ist, bei Erreichen oder Unterschreiten eines bestimmten Initialisierungsabstands (IA) zwischen dem mobilen Endgerät (10) und der Erfassungsvorrichtung (1) und bei gleichzeitiger Ausführung eines vorgegebenen Initialisierungsprogramms (IP) am mobilen Endgerät (10) automatisch eine drahtlose Verbindung zwischen der Drahtloskommunikationseinheit (9) und dem mobilen Endgerät (10) herzustellen und einen Initialisierungsvorgang zur Inbetriebnahme der Erfassungsvorrichtung (1) durchzuführen, **und dass** die Erfassungsvorrichtung (1) durch die Initialisierung für den weiteren Betrieb konfiguriert ist, indem im Zuge der Initialisierung der Erfassungsvorrichtung (1) das Datum, die Uhrzeit sowie eine Kennung des Schweißgeräts (2) und/oder der Erfassungsvorrichtung (1) festsetzbar sind, um die vom Schweißgerät (2) erfassten Daten dem Schweißgerät (2) zuzuordnen.

2. Erfassungsvorrichtung (1) nach Anspruch 1, **dadurch gekennzeichnet, dass** die Drahtloskommunikationseinheit (9) als Nahfeldkommunikationseinheit oder Bluetooth-Kommunikationseinheit ausgebildet ist.

3. Erfassungsvorrichtung (1) nach einem der Ansprüche 1 bis 2, **dadurch**
**gekennzeichnet, dass** an der Erfassungsvorrichtung (1) ein
Datenkommunikationsschnittstelle (6) zur Verbindung der Erfassungsvorrichtung (1) mit einer Auswerteeinheit (AE) vorgesehen ist, vorzugsweise eine Ethernet-Schnittstelle oder WLAN-Schnittstelle.

4. Erfassungsvorrichtung (1) nach Anspruch 3, **dadurch gekennzeichnet, dass** die vom Schweißgerät (2) erfassten Daten in der Auswerteinheit (AE) auswertbar sind.

5. Erfassungsvorrichtung (1) nach einem der Ansprüche 1 bis 3, **dadurch**
**gekennzeichnet, dass** an der Steuerungseinheit (3) der Erfassungsvorrichtung (1) ein Gas-Messanschluss (7) zum Anschluss eines Gas-Sensors (7a) vorgesehen ist **und/oder** dass an der Steuerungseinheit (3) der Erfassungsvorrichtung (1) ein Drahtvorschub-Messanschluss (8) zum Anschluss eines Drahtvorschub-Sensors (8a) vorgesehen ist.

6. Erfassungsvorrichtung (1) nach einem der Ansprüche 1 bis 5, **dadurch**
**gekennzeichnet, dass** die Drahtloskommunikationseinheit (9) in der Erfassungsvorrichtung (1) dazu ausgebildet ist, den Initialisierungsabstand (IA) in Abhängigkeit einer Signalstärke eines vom mobilen Endgerät (10) ausgesandten Verbindungssignals (S) festzulegen.

7. Erfassungsvorrichtung (1) nach einem der Ansprüche 1 bis 5, **dadurch**
**gekennzeichnet, dass** die Erfassungsvorrichtung (1) dazu ausgebildet ist, nach dem erstmaligen Verbinden mit einem mobilen Endgerät (10), eine wiederholte drahtlose Verbindung mit dem selben mobilen Endgerät (10) bei einem relativ zum
Initialisierungsabstand (IA) größeren Verbindungsabstand herzustellen.

8. Schweißgerät (2) zur Durchführung eines Schweißprozesses, **dadurch**
**gekennzeichnet, dass** am Schweißgerät (2) eine Erfassungsvorrichtung (1) nach einem der Ansprüche 1 bis 6 angeordnet ist, um zumindest einen Schweißparameter eines mit dem Schweißgerät (2) durchführbaren Schweißprozesses zu erfassen.

9. Verfahren zum Betreiben einer, an einem Schweißgerät (2) angeordneten Erfassungsvorrichtung (1), zur Erfassung zumindest eines Schweißparameters eines mit dem Schweißgerät (2) durchführbaren Schweißprozesses, wobei die Erfassungsvorrichtung (1) ein eigenständiges Gerät mit einem Gehäuse (G) ist, die vom jeweiligen Schweißgerät (2), an dem sie angeordnet wird, unabhängig ist und in der Erfassungsvorrichtung (1) eine Steuerungseinheit (3) vorgesehen ist, wobei zur Durchführung einer für eine Inbetriebnahme der Erfassungsvorrichtung (1) erforderlichen Initialisierung ein vorgegebenes Initialisierungsprogramm (IP) auf einem mobilen Endgerät (10) ausgeführt wird und das mobile Endgerät (10) gleichzeitig der Erfassungsvorrichtung (1) angenähert wird, **dadurch gekennzeichnet, dass** die Steuerungseinheit (3) die Funktionen der Erfassungsvorrichtung (1) steuert, wobei die Erfassungsvorrichtung (1) während des mit dem Schweißgerät (2) durchgeführten Schweißprozesses einen Schweißstrom und eine Schweißspannung im Schweißstromkreis des Schweißgeräts (2) erfasst, wobei an der Erfassungsvorrichtung (1) zwei Stromanschlüsse (4a, 4b) zur seriellen Einbindung der Erfassungsvorrichtung (1) in den Schweißstromkreis und ein Spannungsmessanschluss (5) zur parallelen Einbindung der Erfassungsvorrichtung (1) in den Schweißstromkreis vorgesehen sind, wobei die Stromanschlüsse (4a, 4b) mit der Steuerungseinheit (3) verbunden sind, **und dass** automatisch eine drahtlose Verbindung zwischen der Erfassungsvorrichtung (1) und dem mobilen Endgerät (10) hergestellt wird und ein Initialisierungsvorgang zur Inbetriebnahme der Erfassungsvorrichtung (1) durchgeführt wird, wenn ein bestimmter Initialisierungsabstand (IA) zwischen dem mobilen Endgerät (10) und der Erfassungsvorrichtung (1) erreicht oder unterschritten wird, **und dass** durch die Initialisierung die Erfassungsvorrichtung (1) für den weiteren Betrieb konfiguriert wird, indem im Zuge der Initialisierung der Erfassungsvorrichtung (1) das Datum, die Uhrzeit sowie eine Kennung des Schweißgeräts (2) und/oder der Erfassungsvorrichtung (1) festgesetzt werden, um die erfassten Daten dem Schweißgerät (2) zuzuordnen.

10. Verfahren nach Anspruch 9, **dadurch gekennzeichnet, dass** die drahtlose Verbindung über Nahfeldkommunikation oder Bluetooth hergestellt wird.

11. Verfahren nach einem der Ansprüche 9 bis 10, **dadurch gekennzeichnet, dass** die Erfassungsvorrichtung (1) seriell in einen Schweißstromkreis des Schweißgeräts (2) eingebunden wird, um einen Schweißstrom im Schweißstromkreis zu erfassen und parallel in den Schweißstromkreis eingebunden wird, um eine Schweißspannung im Schweißstromkreis zu erfassen.

12. Verfahren nach einem der Ansprüche 9 bis 11, **dadurch gekennzeichnet, dass** die Erfassungsvorrichtung (1) über eine, vorzugsweise als Ethernet-Schnittstelle oder WLAN-Schnittstelle ausgebildete Datenkommunikationsschnittstelle (6) mit einer Auswerteeinheit (AE) verbunden wird, um Daten über den zumindest einen erfassten Schweißparameter des durchgeführten Schweißprozesses an die Auswerteeinheit (AE) zu übertragen.

13. Verfahren nach Anspruch 12, **dadurch gekennzeichnet, dass** die vom Schweißgerät (2) erfassten Daten in einer Auswerteinheit (AE) ausgewertet werden.

14. Verfahren nach einem der Ansprüche 9 bis 12, **dadurch gekennzeichnet, dass** die Erfassungsvorrichtung (1) mit einem Gas-Sensor (7a) verbunden wird, um einen Gas-Parameter eines im Schweißprozess verwendeten Schutzgases oder Arbeitsgases zu erfassen **und/oder** dass die Erfassungsvorrichtung (1) mit einem Drahtvorschub-Sensor (8a) verbunden wird, um einen Drahtvorschub-Parameter eines im Schweißprozess verwendeten Schweißdrahts (17) zu erfassen.

15. Verfahren nach einem der Ansprüche 9 bis 14, **dadurch gekennzeichnet, dass** der Initialisierungsabstand (IA) in Abhängigkeit einer Signalstärke eines vom mobilen Endgerät (10) ausgesandten Verbindungssignals (S) der drahtlosen Verbindung festgelegt wird.

16. Verfahren nach einem der Ansprüche 9 bis 15, **dadurch gekennzeichnet, dass** nach dem erstmaligen Herstellen der drahtlosen Verbindung zwischen der Erfassungsvorrichtung (1) und dem mobilen Endgerät (10) eine wiederholte drahtlose Verbindung zwischen der Erfassungsvorrichtung (1) und demselben mobilen Endgerät (10) bei einem relativ zum Initialisierungsabstand (IA) größeren Verbindungsabstand hergestellt wird.

## Claims

1. Measuring apparatus (1) for a welding device, for measuring at least one welding parameter of a welding process that can be carried out using the welding device (2), the measuring apparatus (1) comprising a wireless communication unit (9) for wireless communication with a mobile terminal (10), the measuring apparatus (1) being a stand-alone device having a housing (G) that is independent of the particular welding device (2) on which said apparatus is arranged, and a control unit (3) being provided in the measuring apparatus (1),
**characterized in that** the control unit (3) is provided to control the functions of the measuring apparatus (1), and **in that** the measuring apparatus (1) is provided to measure a welding current and a welding voltage in the welding circuit of the welding device (2) during the welding process carried out using the welding device (2), two current connections (4a, 4b) for serial integration of the measuring apparatus (1) into the welding circuit and a voltage measuring connection (5) for parallel integration of the measuring apparatus (1) into the welding circuit being provided on the measuring apparatus (1), the current connections (4a, 4b) being connected to the control unit (3), **and in that** the wireless communication unit (9) in the measuring apparatus (1) is provided to automatically establish a wireless connection between the wireless communication unit (9) and the mobile terminal (10) when a certain initialization distance (IA) between the mobile terminal (10) and the measuring apparatus (1) is reached or undercut and when a predetermined initialization program (IP) is simultaneously executed on the mobile terminal (10) and to carry out an initialization process for starting up the measuring apparatus (1), **and in that** the measuring apparatus (1) is configured by the initialization for further operation by the date, the time and an identifier of the welding device (2) and/or the measuring apparatus (1) being able to be determined during the initialization of the measuring apparatus (1) in order to assign the data acquired by the welding device (2) to the welding device (2).

2. Measuring apparatus (1) according to claim 1, **characterized in that** the wireless communication unit (9) is designed as a near-field communication unit or Bluetooth communication unit.

3. Measuring apparatus (1) according to either claim 1 or 2,
**characterized in that** a data communication interface (6) for connecting the measuring apparatus (1) to an evaluation unit (AE) is provided on the measuring apparatus (1), preferably an Ethernet interface or WLAN interface.

4. Measuring apparatus (1) according to claim 3, **characterized in that** the data acquired by the welding device (2) can be evaluated in the evaluation unit (AE).

5. Measuring apparatus (1) according to any of claims 1 to 3, **characterized in that** a gas measuring connection (7) for connecting a gas sensor (7a) is provided on the control unit (3) of the measuring apparatus (1), **and/or in that** a wire feed measuring connection (8) for connecting a wire feed sensor (8a) is provided on the control unit (3) of the measuring apparatus (1).

6. Measuring apparatus (1) according to any of claims 1 to 5, **characterized in that** the wireless communication unit (9) in the measuring apparatus (1) is provided to set the initialization distance (IA) depending on a signal strength of a connection signal (S) transmitted by the mobile terminal (10).

7. Measuring apparatus (1) according to any of claims 1 to 5, **characterized in that** the measuring apparatus (1) is provided, after the initial connection to a mobile terminal (10), to establish a repeated wireless connection to the same mobile terminal (10) at a connection distance that is greater than the initialization distance (IA).

8. Welding device (2) for carrying out a welding process,
**characterized in that** a measuring apparatus (1) according to any of claims 1 to 6 is arranged on the welding device (2) in order to measure at least one welding parameter of a welding process that can be carried out using the welding device (2).

9. Method for operating a measuring apparatus (1) arranged on a welding device (2) for measuring at least one welding parameter of a welding process that can be carried out using the welding device (2), the measuring apparatus (1) being a stand-alone device having a housing (G) that is independent of the particular welding device (2) on which said apparatus is arranged, and a control unit (3) being provided in the measuring apparatus (1), a predetermined initialization program (IP) being executed on a mobile terminal (10) and the mobile terminal (10) being simultaneously brought closer to the measuring apparatus (1) in order to carry out an initialization required for starting up the measuring apparatus (1), **characterized in that** the control unit (3) controls the functions of the measuring apparatus (1), the measuring apparatus (1) measuring a welding current and a welding voltage in the welding circuit of the welding device (2) during the welding process carried out using the welding device (2), two current connections (4a, 4b) for serial integration of the measuring apparatus (1) into the welding circuit and a voltage measuring connection (5) for parallel integration of the measuring apparatus (1) into the welding circuit being provided on the measuring apparatus (1), the current connections (4a, 4b) being connected to the control unit (3), **and in that** a wireless connection is automatically established between the measuring apparatus (1) and the mobile terminal (10) and an initialization process for starting up the measuring apparatus (1) is carried out when a certain initialization distance (IA) between the mobile terminal (10) and the measuring apparatus (1) is reached or undercut, **and in that** the measuring apparatus (1) is configured by the initialization for further operation by the date, the time and an identifier of the welding device (2) and/or the measuring apparatus (1) being determined during the initialization of the measuring apparatus (1) in order to assign the acquired data to the welding device (2).

10. Method according to claim 9, **characterized in that** the wireless connection is established via near field communication or Bluetooth.

11. Method according to any of claims 9 to 10, **characterized in that** the measuring apparatus (1) is integrated serially into a welding circuit of the welding device (2) in order to measure a welding current in the welding circuit and is integrated in parallel into the welding circuit in order to measure a welding voltage in the welding circuit.

12. Method according to any of claims 9 to 11, **characterized in that** the measuring apparatus (1) is connected to an evaluation unit (AE) via a data communication interface (6), preferably designed as an Ethernet interface or WLAN interface, in order to transmit data regarding the at least one measured welding parameter of the welding process carried out to the evaluation unit (AE).

13. Method according to claim 12, **characterized in that** the data acquired by the welding device (2) are evaluated in an evaluation unit (AE).

14. Method according to any of claims 9 to 12, **characterized in that** the measuring apparatus (1) is connected to a gas sensor (7a) in order to measure a gas parameter of a protective gas or working gas used in the welding process, **and/or in that** the measuring apparatus (1) is connected to a wire feed sensor (8a) in order to measure a wire feed parameter of a welding wire (17) used in the welding process.

15. Method according to any of claims 9 to 14, **characterized in that** the initialization distance (IA) is set depending on a signal strength of a connection signal (S) of the wireless connection transmitted by the mobile terminal (10).

16. Method according to any of claims 9 to 15, **characterized in that** after the first establishment of the wireless connection between the measuring apparatus (1) and the mobile terminal (10), a repeated wireless connection is established between the measuring apparatus (1) and the same mobile terminal (10) at a connection distance that is greater than the initialization distance (IA).

## Revendications

1. Dispositif d'acquisition (1) pour un appareil de soudage, destiné à acquérir au moins un paramètre de soudage d'un processus de soudage pouvant être réalisé à l'aide de l'appareil de soudage (2), le dispositif d'acquisition (1) présentant une unité de communication sans fil (9) pour la communication sans fil avec un terminal mobile (10), le dispositif d'acquisition (1) étant un appareil autonome comportant un boîtier (G), qui est indépendant de l'appareil de soudage (2) respectif sur lequel il est disposé, et une unité de commande (3) étant prévue dans le dispositif d'acquisition (1), **caractérisé en ce que** l'unité de commande (3) est conçue pour commander les fonctions du dispositif d'acquisition (1) et **en ce que** le dispositif d'acquisition (1) est conçu pour acquérir un courant de soudage et une tension de soudage dans le circuit électrique de soudage de l'appareil de soudage (2) pendant le processus de soudage réalisé à l'aide de l'appareil de soudage (2), deux raccordements électriques (4a, 4b) étant prévus sur le dispositif d'acquisition (1) pour l'intégration en série du dispositif d'acquisition (1) dans le circuit électrique de soudage et un raccordement de mesure de tension (5) étant prévu pour l'intégration en parallèle du dispositif d'acquisition (1) dans le circuit électrique de soudage, les raccordements électriques (4a, 4b) étant connectés à l'unité de commande (3) et **en ce que** l'unité de communication sans fil (9) dans le dispositif d'acquisition (1) est conçue pour établir automatiquement une connexion sans fil entre l'unité de communication sans fil (9) et le terminal mobile (10) et pour réaliser un processus d'initialisation pour la mise en service du dispositif d'acquisition (1) lorsqu'une distance entre le terminal mobile (10) et le dispositif d'acquisition (1) atteint ou passe sous une distance d'initialisation (IA) déterminée et en cas d'exécution simultanée d'un programme d'initialisation (IP) prédéfini sur le terminal mobile (10) **et en ce que** le dispositif d'acquisition (1) est configuré par l'initialisation pour la suite du fonctionnement, en fixant, au cours de l'initialisation du dispositif d'acquisition (1), la date, l'heure ainsi qu'un identifiant de l'appareil de soudage (2) et/ou du dispositif d'acquisition (1) afin d'attribuer les données acquises concernant l'appareil de soudage (2) à l'appareil de soudage (2).

2. Dispositif d'acquisition (1) selon la revendication 1, **caractérisé en ce que** l'unité de communication sans fil (9) est conçue comme unité de communication en champ proche ou unité de communication Bluetooth.

3. Dispositif d'acquisition (1) selon l'une des revendications 1 à 2, **caractérisé en ce qu'**une interface de communication de données (6), de préférence une interface Ethernet ou une interface WLAN, destinée à connecter le dispositif d'acquisition (1) à une unité d'évaluation (AE) est prévue sur le dispositif d'acquisition (1).

4. Dispositif d'acquisition (1) selon la revendication 3, **caractérisé en ce que** les données acquises concernant l'appareil de soudage (2) peuvent être évaluées dans l'unité d'évaluation (AE).

5. Dispositif d'acquisition (1) selon l'une des revendications 1 à 3, **caractérisé en ce qu'**un raccordement de mesure de gaz (7) destiné à raccorder un capteur de gaz (7a) est prévu sur l'unité de commande (3) du dispositif d'acquisition (1) et/ou **en ce qu'**un raccordement de mesure d'avance de fil (8) destiné à raccorder un capteur d'avance de fil (8a) est prévu sur l'unité de commande (3) du dispositif d'acquisition (1).

6. Dispositif d'acquisition (1) selon l'une des revendications 1 à 5, **caractérisé en ce que** l'unité de communication sans fil (9) dans le dispositif d'acquisition (1) est conçue pour fixer la distance d'initialisation (IA) en fonction d'une intensité de signal d'un signal de connexion (S) émis par le terminal mobile (10).

7. Dispositif d'acquisition (1) selon l'une des revendications 1 à 5, **caractérisé en ce que** le dispositif d'acquisition (1) est conçu pour établir, après la première connexion avec un terminal mobile (10), une connexion sans fil répétée avec le même terminal mobile (10) à une distance de connexion plus grande par rapport à la distance d'initialisation (IA).

8. Appareil de soudage (2) pour la réalisation d'un processus de soudage, **caractérisé en ce qu'**un dispositif d'acquisition (1) selon l'une des revendications 1 à 6 est disposé sur l'appareil de soudage (2), afin d'acquérir au moins un paramètre de soudage d'un processus de soudage pouvant être réalisé à l'aide de l'appareil de soudage (2).

9. Procédé de fonctionnement d'un dispositif d'acquisition (1) disposé sur un appareil de soudage (2) et destiné à acquérir au moins un paramètre de soudage d'un processus de soudage pouvant être réalisé à l'aide de l'appareil de soudage (2), le dispositif d'acquisition (1) étant un appareil autonome comportant un boîtier (G), qui est indépendant de l'appareil de soudage (2) respectif sur lequel il est disposé, et une unité de commande (3) étant prévue dans le dispositif d'acquisition (1), un programme d'initialisation (IP) prédéfini étant exécuté sur un terminal mobile (10) afin de réaliser une initialisation nécessaire à une mise en service du dispositif d'acquisition (1) et le terminal mobile (10) étant simultanément rapproché du dispositif d'acquisition (1), **caractérisé en ce que** l'unité de commande (3) commande les fonctions du dispositif d'acquisition (1), le dispositif d'acquisition (1) acquérant un courant de soudage et une tension de soudage dans le circuit électrique de soudage de l'appareil de soudage (2) pendant le processus de soudage réalisé à l'aide de l'appareil de soudage (2), deux raccordements électriques (4a, 4b) étant prévus sur le dispositif d'acquisition (1) pour l'intégration en série du dispositif d'acquisition (1) dans le circuit électrique de soudage et un raccordement de mesure de tension (5) étant prévu pour l'intégration en parallèle du dispositif d'acquisition (1) dans le circuit électrique de soudage, les raccordements électriques (4a, 4b) étant connectés à l'unité de commande (3), et **en ce qu'**une connexion sans fil est établie automatiquement entre le dispositif d'acquisition (1) et le terminal mobile (10) et un processus d'initialisation est réalisé pour la mise en service du dispositif d'acquisition (1) lorsque la distance entre le terminal mobile (10) et le dispositif d'acquisition (1 ) atteint ou passe en-dessous d'une distance d'initialisation (IA) déterminée et **en ce que** l'initialisation configure le dispositif d'acquisition (1) pour la suite du fonctionnement en fixant, au cours de l'initialisation du dispositif d'acquisition (1), la date, l'heure ainsi qu'un identifiant de l'appareil de soudage (2) et/ou du dispositif d'acquisition (1) afin d'attribuer les données acquises à l'appareil de soudage (2).

10. Procédé selon la revendication 9, **caractérisé en ce que** la connexion sans fil est établie par communication en champ proche ou par Bluetooth.

11. Procédé selon l'une des revendications 9 à 10, **caractérisé en ce que** le dispositif d'acquisition (1) est intégré en série dans un circuit électrique de soudage de l'appareil de soudage (2) afin d'acquérir un courant de soudage dans le circuit électrique de soudage et est intégré en parallèle dans le circuit électrique de soudage afin d'acquérir une tension de soudage dans le circuit électrique de soudage.

12. Procédé selon l'une des revendications 9 à 11, **caractérisé en ce que** le dispositif d'acquisition (1) est connecté à une unité d'évaluation (AE) par l'intermédiaire d'une interface de communication de données (6) conçue de préférence sous la forme d'une interface Ethernet ou d'une interface WLAN, afin de transmettre à l'unité d'évaluation (AE) des données concernant l'au moins un paramètre de soudage acquis du processus de soudage réalisé.

13. Procédé selon la revendication 12, **caractérisé en ce que** les données acquises concernant l'appareil de soudage (2) sont évaluées dans une unité d'évaluation (AE).

14. Procédé selon l'une des revendications 9 à 12, **caractérisé en ce que** le dispositif d'acquisition (1) est connecté à un capteur de gaz (7a) afin d'acquérir un paramètre de gaz d'un gaz de protection ou de travail utilisé dans le processus de soudage et/ou **en ce que** le dispositif d'acquisition (1) est connecté à un capteur d'avance de fil (8a) afin d'acquérir un paramètre d'avance de fil d'un fil de soudage (17) utilisé dans le processus de soudage.

15. Procédé selon l'une des revendications 9 à 14, **caractérisé en ce que** la distance d'initialisation (IA) est fixée en fonction d'une intensité de signal d'un signal de connexion (S) de la connexion sans fil émis par le terminal mobile (10).

16. Procédé selon l'une des revendications 9 à 15,
**caractérisé en ce qu'**après avoir établi pour la première fois la connexion sans fil entre le dispositif d'acquisition (1) et le terminal mobile (10), une connexion sans fil répétée est établie entre le dispositif d'acquisition (1) et le même terminal mobile (10) à une distance de connexion plus grande par rapport à la distance d'initialisation (IA).
